# FASCICULE DE BREVET EUROPEEN

(11) **EP 1 815 773 B1**
(45) Date de publication et mention de la délivrance du brevet: **10.09.2008**
(21) Numéro de dépôt: 07356013.8
(22) Date de dépôt: 01.02.2007
(51) Int. Cl.: A47J 27/04

(54) **Base chauffante à production de vapeur rapide et à utilisation simplifiée pour cuiseur vapeur**
Heizsockel zur schnellen Dampferzeugung und zur vereinfachten Verwendung für Dampfkocher
Heating base with quick steam production and simplified use for a steam cooker

(30) Priorité: 03.02.2006 FR 0600995
(43) Date de publication de la demande: 08.08.2007
(73) Titulaire: SEB SA, 69130 Ecully (FR)
(72) Inventeur: Dumoux, Philippe, 21120 Gemeaux (FR); Sobole, Céline, 21490 Clénay (FR)
(74) Mandataire: Kiehl, Hubert

(56) Documents cités:
- WO-A-00/30510
- US-A- 5 189 947

## Description

La présente invention concerne le domaine technique des appareils de cuisson à la vapeur, ou cuiseurs vapeur. La présente invention concerne plus particulièrement une base chauffante permettant la production de vapeur.

Il est connu du document WO 00/30510 une base de production de vapeur pour cuiseur vapeur, comportant un dispositif de chauffe monté dans le fond d'un réceptacle d'un élément inférieur, ce dispositif de chauffe étant entouré par un organe séparateur issu d'un élément supérieur pour délimiter une chambre d'ébullition. Toutefois, dans la construction proposée, l'élément chauffant est proéminent. Au fur et à mesure de la baisse du niveau d'eau dans le réservoir, la surface de l'élément chauffant est exposée à la vapeur, ce qui favorise l'apparition de dépôts. Usuellement, le détartrage de tels éléments est malaisé.

Un objet de la présente invention est de proposer une base de production de vapeur pour cuiseur vapeur, dans laquelle la production de vapeur intervient rapidement.

Un autre objet de la présente invention est de proposer une base de production de vapeur pour cuiseur vapeur, présentant une manipulation simplifiée.

Un autre objet de la présente invention est de proposer une base de production de vapeur pour cuiseur vapeur, dans laquelle le détartrage de l'élément chauffant est facilité.

Ces objets sont atteints avec une base de production de vapeur pour cuiseur vapeur, comportant un réceptacle présentant un fond, un dispositif de chauffe monté dans le fond du réceptacle, un organe séparateur s'étendant dans le réceptacle, l'organe séparateur délimitant latéralement au moins partiellement une chambre d'ébullition agencée au dessus du dispositif de chauffe, l'organe séparateur ménageant un passage inférieur avec le réceptacle, la chambre d'ébullition comportant au moins une ouverture de sortie de vapeur, du fait que le dispositif de chauffe comporte une plaque de chauffe, que le carré de la hauteur de l'organe séparateur est inférieur à 3/10 de la surface de base de la chambre d'ébullition, et que la section du passage inférieur est inférieure à 1/10 de la surface latérale de la chambre d'ébullition délimitée par l'organe séparateur. La hauteur de l'organe séparateur correspond au niveau d'eau maximal conseillé pour le remplissage du réceptacle. Ces dispositions permettent d'obtenir une base chauffante présentant une chambre d'ébullition efficace dans laquelle la production de vapeur intervient rapidement, grâce une alimentation en eau contrôlée et à une grande surface de chauffe autorisant des puissances de chauffe élevées. De plus, cette base chauffante est facile à entretenir, du fait de l'utilisation d'une plaque de chauffe. De surcroît, la hauteur de la base chauffante peut être plus réduite.

Avantageusement alors, le carré de la hauteur de la chambre d'ébullition est inférieur à 3/10 de la surface de base de la chambre d'ébullition. La hauteur de la chambre d'ébullition correspond au niveau d'eau maximal possible pour le remplissage du réceptacle. Ces dispositions permettent de conserver une chambre d'ébullition efficace même en cas de remplissage excessif.

Avantageusement alors, la section du passage inférieur est inférieure à 1/20 de la surface latérale de la chambre d'ébullition délimitée par l'organe séparateur. Cette disposition permet une efficacité encore meilleure de la chambre d'ébullition, permettant une production de vapeur plus rapide.

Avantageusement encore, la base de production de vapeur comporte un élément inférieur formant le réceptacle, et un élément supérieur disposé sur l'élément inférieur, l'élément supérieur présentant l'organe séparateur s'étendant dans le réceptacle. Cette disposition permet de réduire le nombre de pièces à manipuler.

Avantageusement alors, l'élément supérieur forme un bac récupérateur à jus. Cette disposition permet d'éviter de polluer l'eau présente dans le réceptacle.

Avantageusement encore, le dispositif de chauffe occupe plus de 80% d'une largeur du réceptacle, afin de maximiser la surface de chauffe.

Selon une forme de réalisation avantageuse, le réceptacle présente une paroi latérale comportant un bossage latéral interne.

Avantageusement alors des moyens de commande sont agencés à l'extérieur du bossage latéral interne. Cette disposition permet notamment de réduire l'encombrement de l'élément inférieur.

Avantageusement encore, l'élément séparateur délimite avec le réceptacle deux réservoirs d'eau communiquant l'un avec l'autre. Cette disposition permet d'agencer les moyens de chauffe dans la partie centrale d'un réceptacle allongé.

Avantageusement alors, les deux réservoirs d'eau sont disposés de part et d'autre du bossage latéral interne. Cette disposition permet d'agencer les moyens de chauffe en vis-à-vis du bossage latéral interne, ce qui contribue à simplifier l'agencement des moyens de commande.

Avantageusement encore, l'organe séparateur forme une couronne. Cette disposition évite d'utiliser une paroi latérale de la partie inférieure pour délimiter la chambre de chauffe, ce qui permet de simplifier la construction.

Avantageusement encore, le dispositif de chauffe est disposé entièrement en dessous du fond du réceptacle. En d'autres termes, la plaque de chauffe est agencée plus bas que le fond du réceptacle. Ainsi le dispositif de chauffe est agencé dans une dépression. Cette disposition permet de faciliter le détartrage du dispositif de chauffe. Il suffit en effet de remplir la dépression de liquide détartrant et d'alimenter le dispositif de chauffe. La quantité de liquide détartrant utilisée peut être réduite. Le fond du réceptacle n'est pas directement exposé au liquide détartrant.

Avantageusement encore, le dispositif de chauffe est monté dans une ouverture ménagée dans le fond du réceptacle. Cette disposition permet d'utiliser des dispositifs de chauffe existants, plutôt qu'une construction spécifique.

Avantageusement encore le réceptacle est réalisé en matière plastique. Cette disposition évite un effet radiateur susceptible de refroidir l'élément chauffant avec l'eau froide présente dans le réceptacle. Cette disposition permet une construction économique.

Avantageusement encore la plaque de chauffe comporte un bord périphérique inséré dans un joint annulaire monté dans l'ouverture. Le joint annulaire permet de limiter les sollicitations thermiques du réceptacle ainsi que les sollicitations mécaniques du réceptacle dues aux dilatations de la plaque de chauffe.

Avantageusement encore le joint annulaire est monté dans l'ouverture en dessous du fond du réceptacle. Cette disposition facilite le détartrage de la plaque de chauffe.

Avantageusement encore le bord périphérique est retourné vers le bas. Cette disposition facilite le montage du dispositif de chauffe dans la base chauffante.

Avantageusement encore le joint annulaire est monté dans une gorge périphérique ménagée en dessous de l'ouverture. Le montage du dispositif de chauffe est ainsi simplifié.

L'invention sera mieux comprise à l'étude d'un exemple de réalisation, pris à titre nullement limitatif, illustré dans les figures annexées, dans lesquelles :
- la figure 1 est une vue en coupe d'un exemple de réalisation d'une base de production de vapeur pour cuiseur vapeur selon l'invention,
- la figure 2 est une vue en perspective et en coupe transversale de la base de production de vapeur pour cuiseur vapeur selon l'invention illustrée à la figure 1,
- la figure 3 est une vue de dessus en légère perspective d'un élément inférieur de la base de production de vapeur pour cuiseur vapeur selon l'invention illustrée aux figures 1 et 2,
- la figure 4 est une vue de dessus en perspective d'un élément supérieur de la base de production de vapeur pour cuiseur vapeur selon l'invention illustrée aux figures 1 et 2,
- la figure 5 est une vue de dessous en perspective d'un élément supérieur de la base de production de vapeur pour cuiseur vapeur selon l'invention illustrée aux figures 1 et 2.

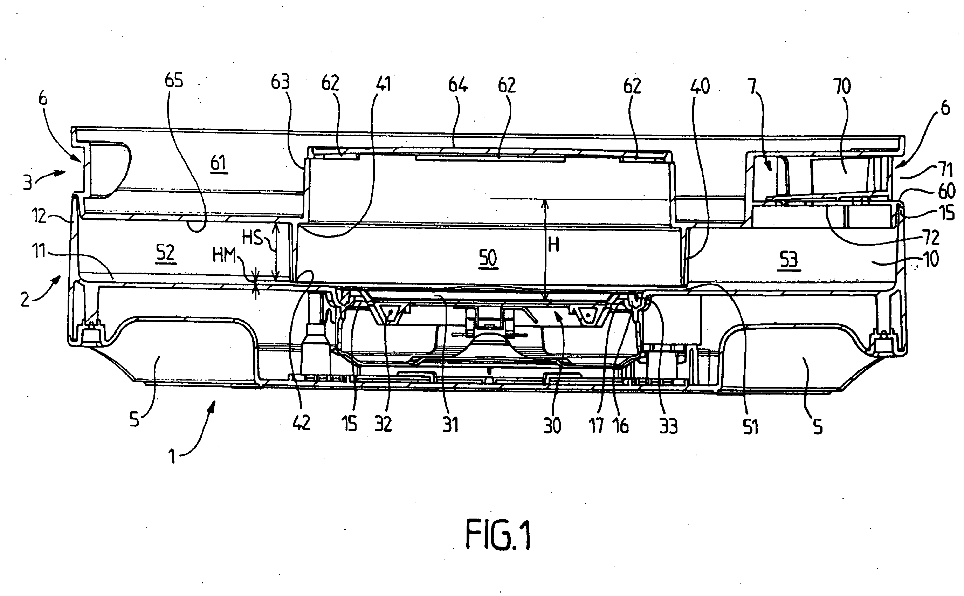

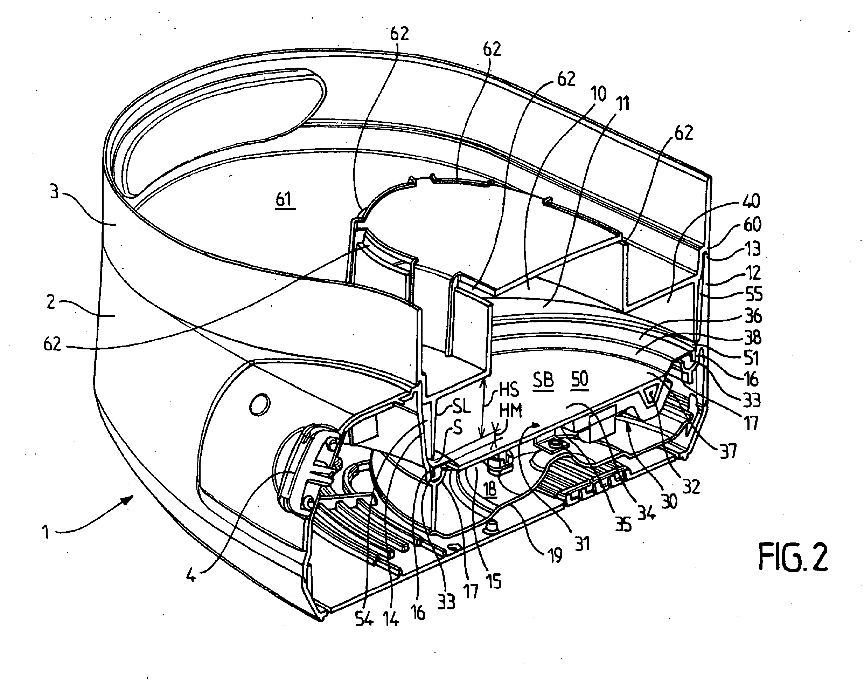

Les figures 1 et 2 montrent une base de production de vapeur 1 pour cuiseur vapeur, comportant un élément inférieur 2 et un élément supérieur 3 disposé sur l'élément inférieur 2. L'élément inférieur 2 et l'élément supérieur 3 présentent une forme allongée.

L'élément inférieur 2 présente, à chacune des extrémités, un organe de préhension 5 disposé en partie inférieure, accessible latéralement. L'élément supérieur 3 présente, à chacune des extrémités, un organe de préhension 6 disposé latéralement. Les organes de préhensions 5, 6 sont formés par des renfoncements.

L'élément inférieur 2 forme un réceptacle 10 présentant un fond 11 et une paroi latérale 12 comportant un bord supérieur 13 définissant une ouverture supérieure. Le réceptacle 10 est prévu pour contenir de l'eau en vue de produire de la vapeur. Le réceptacle 10 est avantageusement réalisé en matière plastique et présente une fenêtre 20 transparente ou translucide permettant à l'utilisateur de visualiser le niveau de l'eau dans le réceptacle 10.

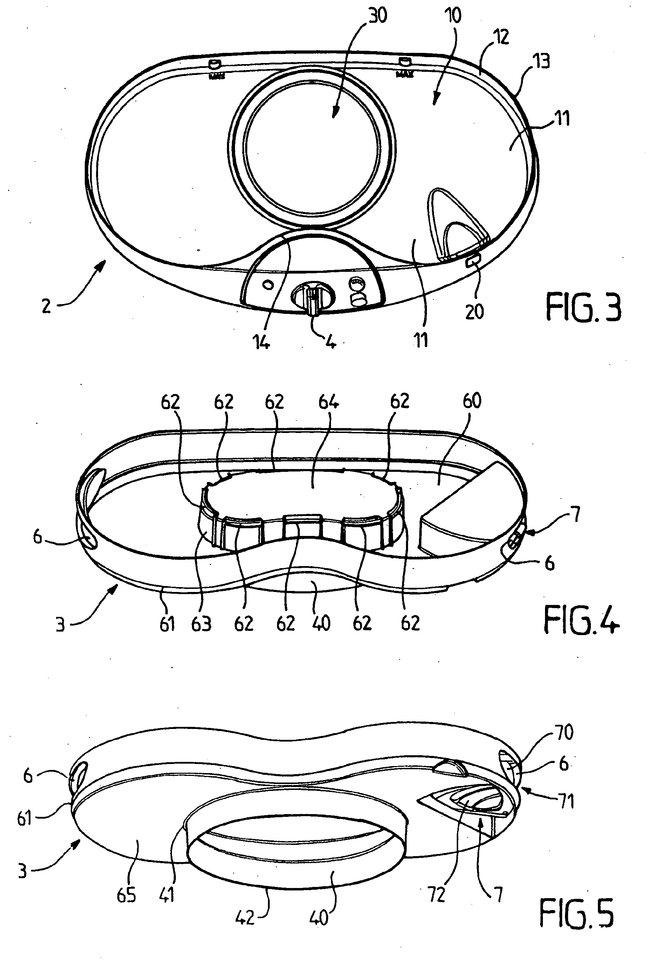

L'élément inférieur 2 comprend un dispositif de chauffe 30 monté dans le fond 11 du réceptacle 10. Tel que visible sur les figures 2 et 3, le dispositif de chauffe 30 occupe plus de 80% d'une largeur du réceptacle 10.

L'élément inférieur 2 comporte des moyens de commande 4 prévus pour piloter le dispositif de chauffe 30, notamment pour régler le temps de cuisson et/ou le temps de maintien au chaud.

La paroi latérale 12 du réceptacle 10 présente un bossage latéral interne 14. Les moyens de commande 4 sont agencés à l'extérieur du bossage latéral interne 14.

Tel que visible sur les figures 1 et 2, le dispositif de chauffe 30 comporte une plaque de chauffe 31 associée à un élément chauffant 32. Le dispositif de chauffe 30 est monté dans une ouverture 15 ménagée dans le fond 11 du réceptacle 10.

Tel que mieux visible sur la figure 2, la plaque de chauffe 31 comporte un bord périphérique 33 inséré dans un joint annulaire 16 monté dans l'ouverture 15. Le joint annulaire 16 est monté dans l'ouverture 15 en dessous du fond 11 du réceptacle 10. Le bord périphérique 33 est retourné vers le bas. Le joint annulaire 16 est monté dans une gorge périphérique 17 ménagée en dessous de l'ouverture 15. La gorge périphérique 17 est issue de la pièce formant le réceptacle 10. Le dispositif de chauffe 30 est disposé entièrement en dessous du fond 11 du réceptacle 10.

La plaque de chauffe 31 comporte une face supérieure 34 avantageusement réalisée en acier inoxydable. La plaque de chauffe 31 comporte une face inférieure 35 rapportée, avantageusement réalisée en aluminium, pour diffuser la chaleur issue de l'élément chauffant 32 monté sur la face inférieure 35. La face supérieure 34 présente une zone périphérique 36 surélevée. La zone périphérique 36 est reliée à une zone centrale 37 par une partie annulaire 38 inclinée. Le bord périphérique 33 prolonge la zone périphérique 36. La face inférieure 35 est disposée sous la zone centrale 37. Le dispositif de chauffe 30 est logé dans un espace 18 fermé par un capot 19.

La base de production de vapeur 1 comporte un dispositif de remplissage 7. Le dispositif de remplissage 7 est agencé dans l'élément supérieur 3. Le dispositif de remplissage 7 est agencé au niveau de l'un des organes de préhension 6. Le dispositif de remplissage 7 est formé par un tiroir pivotant 70 monté dans une ouverture de remplissage 71 de l'élément supérieur 3. L'ouverture latérale 71 communique avec une ouverture de versement 72 agencée au dessus du réceptacle 10, tel que visible sur la figure 1.

L'élément supérieur 3 comporte un rebord périphérique inférieur 60 prévu pour reposer sur l'élément inférieur 2. Plus particulièrement, le rebord périphérique inférieur 60 repose sur le bord supérieur 13 de la paroi latérale 12 du réceptacle 10.

L'élément supérieur 3 forme un bac récupérateur à jus 61. Le dispositif de remplissage 7 est agencé sous le bac récupérateur à jus 61.

L'élément supérieur 3 présente un organe séparateur 40 s'étendant dans le réceptacle 10 lorsque l'élément supérieur 3 est disposé sur l'élément inférieur 2. L'organe séparateur 40 délimite alors latéralement une chambre d'ébullition 50 agencée au dessus du dispositif de chauffe 30, visible sur les figures 1 et 2.

La chambre d'ébullition 50 comporte en sa partie supérieure des ouvertures de sortie de vapeur 62. Plus particulièrement, les ouvertures de sortie de vapeur 62 sont ménagées sur une cheminée 63 agencée dans le bac récupérateur à jus 61. La cheminée 63 présente un toit 64 prévu pour éviter des retombées dans la chambre d'ébullition 50. Les ouvertures de sortie de vapeur 62 sont disposées latéralement. A titre de variante, la chambre d'ébullition 50 comporte en sa partie supérieure au moins une ouverture de sortie de vapeur 62.

L'organe séparateur 40 est issu d'une face inférieure 65 du bac récupérateur à jus 61. L'organe séparateur 40 présente un sommet 41 se raccordant à la face inférieure 65 du bac récupérateur à jus 61. L'organe séparateur 40 comporte un bord inférieur 42. L'organe séparateur 40 présente une hauteur HS entre le bord inférieur 42 et le sommet 41.

L'organe séparateur 40 ménage un passage inférieur 51 avec le réceptacle 10, visible sur les figures 1 et 2. Le passage inférieur 51 présente une section S.

Du fait de la configuration allongée du réceptacle 10, l'organe séparateur 40 délimite dans le réceptacle 10 deux réservoirs d'eau 52, 53. Les deux réservoirs d'eau 52, 53 communiquent l'un avec l'autre par l'intermédiaire du passage inférieur 51 ainsi que par deux espaces latéraux 54, 55 ménagés entre l'organe séparateur 40 et la paroi latérale 12 du réceptacle 10. Les deux réservoirs d'eau 52, 53 sont disposés de part et d'autre du bossage interne 14. Le passage inférieur 51 permet l'alimentation de la chambre d'ébullition 50 à partir des réservoirs d'eau 52, 53.

La chambre d'ébullition 50 peut être définie par une surface de base SB, une hauteur H et une surface latérale SL. La surface de base SB correspond à la superficie maximale délimitée par l'organe séparateur 40. La hauteur H correspond à la hauteur maximale d'eau dans le réceptacle 10. La hauteur H est de ce fait définie par la distance entre la plaque de chauffe 31 et la partie inférieure de l'ouverture de remplissage 71. La surface latérale SL est délimitée par l'organe séparateur 40 et le passage inférieur 51. La cheminée 63 présente une section inférieure à la surface de base SB de la chambre d'ébullition 50.

Dans l'exemple de réalisation illustré aux figures, la surface de base SB de la chambre d'ébullition est d'environ 200 cm², et la hauteur HS de l'organe séparateur 40 est de 25,5 mm. Ainsi le carré de la hauteur HS de l'organe séparateur 40 est inférieur à 3/10 de la surface de base SB de la chambre d'ébullition 50. Le rapport HS²/SB est voisin de 0,033. La hauteur H de la chambre d'ébullition 50 est d'environ 4,1 cm. Ainsi le carré de la hauteur H de la chambre d'ébullition 50 est inférieur à 3/10 de la surface de base SB de la chambre d'ébullition 50. Le rapport H²/SB est voisin de 0,085.

Plus particulièrement, l'organe séparateur 40 forme une couronne. Le passage inférieur 51 est annulaire. Le passage inférieur 51 présente une hauteur moyenne HM. Ainsi le rapport entre la section S du passage inférieur 51 et la surface latérale SL de la chambre d'ébullition 50 correspond sensiblement au rapport entre la hauteur moyenne HM du passage inférieur 51 et la hauteur HS de l'organe séparateur 40.

Dans l'exemple de réalisation illustré aux figures, la hauteur moyenne HM du passage inférieur 51 est comprise entre 0,5 et 1 mm. Ainsi, la section S du passage inférieur 51 est inférieure à 1/10 de la surface latérale SL de la chambre d'ébullition 50 délimitée par l'organe séparateur 40. De préférence, tel que pour l'exemple de réalisation illustré aux figures, la section S du passage inférieur 51 est inférieure à 1/20 de la surface latérale SL de la chambre d'ébullition 50 délimitée par l'organe séparateur 40. Le rapport HM/HS équivalent au rapport S/SL est inférieur à 1/25.

La puissance P du dispositif de chauffe est de 2000 W, ce qui donne un rapport entre la puissance du dispositif de chauffe P et la surface de base SB de la chambre d'ébullition 50 de l'ordre de 10 W/cm². De préférence, le rapport P/SB est supérieur à 5 W/cm².

Le fonctionnement de la présente invention est le suivant.

L'utilisateur dispose l'élément supérieur 3 sur l'élément inférieur 2. L'organe séparateur 40 placé dans le réceptacle 10 délimite la chambre d'ébullition 50 ainsi que les réservoirs d'eau 52, 53. L'organe séparateur 40 s'étend au-dessus et autour du dispositif de chauffe 30. L'utilisateur peut remplir d'eau le réceptacle 10 par le dispositif de remplissage 7. De préférence l'eau ne dépasse pas la face inférieure 65 du bac récupérateur à jus 61.

La surface importante du dispositif de chauffe 30 par rapport à la hauteur d'eau dans le réceptacle 10 ainsi que la section S réduite du passage inférieur 51 permettent d'obtenir une production rapide de vapeur s'échappant par les ouvertures de sortie de vapeur 62. Cette vapeur peut alors être dirigée dans une enceinte de cuisson (non représentée aux figures), disposée sur la base de cuisson 1. La montée en température des aliments peut ainsi être rapide.

La présence de la plaque de chauffe 31 simplifie les opérations de nettoyage. L'agencement de la plaque de chauffe 31 en dessous du niveau du fond 11 du réceptacle 10 permet de limiter la quantité d'agent détartrant nécessaire et évite l'imprégnation du fond 11 du réceptacle 10 par l'agent détartrant.

A titre de variante complémentaire, le passage inférieur 51 n'est pas nécessairement annulaire. Si désiré, la section S du passage inférieur 51 peut comporter plusieurs parties séparées.

A titre de variante complémentaire, l'organe séparateur 40 pourrait être indépendant de l'élément supérieur 3. L'organe séparateur 40 peut alors notamment reposer sur le fond 11 du réceptacle 10.

A titre de variante complémentaire, l'organe séparateur 40 n'est pas nécessairement amovible par rapport au réceptacle 10.

A titre de variante complémentaire, l'organe séparateur 40 peut délimiter latéralement au moins partiellement la chambre d'ébullition 50. L'organe séparateur 40 n'est alors pas nécessairement annulaire. L'organe séparateur 40 peut notamment s'étendre dans le réceptacle 10 entre deux portions de la paroi latérale 12, en ménageant un passage inférieur. La surface de base SB est alors définie par l'organe séparateur 40 et par une partie de la paroi latérale 12 du réceptacle 10.

A titre de variante complémentaire, l'organe séparateur 40 peut délimiter dans le réceptacle 10 un seul réservoir d'eau, ou plus de deux réservoirs d'eau.

A titre de variante complémentaire, la plaque de chauffe 31 pourrait être prévue pour être échauffée par induction, la plaque à induction n'étant pas nécessairement intégrée dans la base 1.

La présente invention n'est nullement limitée à l'exemple de réalisation décrit et à ses variantes, mais englobe de nombreuses modifications dans le cadre des revendications.

## Revendications

1. Base de production de vapeur pour cuiseur vapeur, comportant un réceptacle (10) présentant un fond (11), un dispositif de chauffe (30) monté dans le fond (11) du réceptacle (10), un organe séparateur (40) s'étendant dans le réceptacle (10), l'organe séparateur (40) délimitant latéralement au moins partiellement une chambre d'ébullition (50) agencée au dessus du dispositif de chauffe (30), l'organe séparateur (40) ménageant un passage inférieur (51) avec le réceptacle (10), la chambre d'ébullition (50) comportant au moins une ouverture de sortie de vapeur (62), **caractérisée en ce que** le dispositif de chauffe (30) comporte une plaque de chauffe (31), **en ce que** le carré de la hauteur (HS) de l'organe séparateur (40) est inférieur à 3/10 de la surface de base (SB) de la chambre d'ébullition (50), et **en ce que** la section (S) du passage inférieur (51) est inférieure à 1/10 de la surface latérale (SL) de la chambre d'ébullition (50) délimitée par l'organe séparateur (40).

2. Base de production de vapeur pour cuiseur vapeur selon la revendication 1, **caractérisée en ce que** le carré de la hauteur (H) de la chambre d'ébullition (50) est inférieur à 3/10 de la surface de base (SB) de la chambre d'ébullition (50).

3. Base de production de vapeur pour cuiseur vapeur selon l'une des revendications 1 ou 2, **caractérisée en ce que** la section (S) du passage inférieur (51) est inférieure à 1/20 de la surface latérale (SL) de la chambre d'ébullition (50) délimitée par l'organe séparateur (40).

4. Base de production de vapeur pour cuiseur vapeur selon l'une des revendications 1 à 3, **caractérisée en ce qu'**elle comporte un élément inférieur (2) formant le réceptacle (10) et un élément supérieur (3) disposé sur l'élément inférieur (2), l'élément supérieur (3) présentant l'organe séparateur (40) s'étendant dans le réceptacle (10).

5. Base de production de vapeur pour cuiseur vapeur selon la revendication 4, **caractérisée en ce que** l'élément supérieur (3) forme un bac récupérateur à jus (61).

6. Base de production de vapeur pour cuiseur vapeur selon l'une des revendications 1 à 5, **caractérisée en ce que** le dispositif de chauffe (30) occupe plus de 80% d'une largeur du réceptacle (10).

7. Base de production de vapeur pour cuiseur vapeur selon l'une des revendications 1 à 6, **caractérisée en ce que** le réceptacle (10) présente une paroi latérale (12) comportant un bossage latéral interne (14).

8. Base de production de vapeur pour cuiseur vapeur selon la revendication 7, **caractérisée en ce que** des moyens de commande (4) sont agencés à l'extérieur du bossage latéral interne (14).

9. Base de production de vapeur pour cuiseur vapeur selon l'une des revendications 1 à 8, **caractérisée en ce que** l'élément séparateur (40) délimite avec le réceptacle (10) deux réservoirs d'eau (52, 53) communiquant l'un avec l'autre.

10. Base de production de vapeur pour cuiseur vapeur selon l'une des revendications 7 ou 8, **caractérisée en ce que** l'élément séparateur (40) délimite avec le réceptacle (10) deux réservoirs d'eau (52, 53) communiquant l'un avec l'autre, et **en ce que** les deux réservoirs d'eau (52, 53) sont disposés de part et d'autre du bossage latéral interne (14).

11. Base de production de vapeur pour cuiseur vapeur selon l'une des revendications 1 à 10, **caractérisée en ce que** l'organe séparateur (40) forme une couronne.

12. Base de production de vapeur pour cuiseur vapeur selon l'une des revendications 1 à 11, **caractérisée en ce que** le dispositif de chauffe (30) est disposé entièrement en dessous du fond (11) du réceptacle (10).

13. Base de production de vapeur pour cuiseur vapeur selon l'une des revendications 1 à 12, **caractérisée en ce que** le dispositif de chauffe (30) est monté dans une ouverture (15) ménagée dans le fond (11) du réceptacle (10).

14. Base de production de vapeur pour cuiseur vapeur selon l'une des revendications 1 à 13, **caractérisée en ce que** le réceptacle (10) est réalisé en matière plastique.

15. Base de production de vapeur pour cuiseur vapeur selon l'une des revendications 1 à 14, **caractérisée en ce que** la plaque de chauffe (31) comporte un bord périphérique (33) inséré dans un joint annulaire (16) monté dans l'ouverture (15).

16. Base de production de vapeur pour cuiseur vapeur selon la revendication 15, **caractérisée en ce que** le joint annulaire (16) est monté dans l'ouverture (15) en dessous du fond (11) du réceptacle (10).

17. Base de production de vapeur pour cuiseur vapeur selon l'une des revendications 15 ou 16, **caractérisée en ce que** le bord périphérique (33) est retourné vers le bas.

18. Base de production de vapeur pour cuiseur vapeur selon l'une des revendications 15 à 17, **caractérisée en ce que** le joint annulaire (16) est monté dans une gorge périphérique (17) ménagée en dessous de l'ouverture (15).

## Claims

1. A steam generator base for a steam cooker, said base comprising a receptacle (10) having a bottom (11), a heater device (30) mounted in the bottom (11) of the receptacle (10), and a separator member (40) extending in the receptacle (10), the separator member (40) defining at least part of the side of a boiling chamber (50) that is arranged above the heater device (30), the separator member (40) co-operating with the receptacle (10) to form a bottom passage (51), the boiling chamber (50) being provided with at least one steam outlet orifice (62), said steam generator base being **characterized in that** the heater means (30) comprise a hotplate (31), **in that** the square of the height (HS) of the separator member (40) is less than 3/10^{ths} of the base area (SB) of the boiling chamber (50), and **in that** the cross-sectional area (S) of the bottom passage (51) is less than 1/10^{th} of the side area (SL) of the boiling chamber (50) defined by the separator member (40).

2. A steam generator base for a steam cooker according to claim 1, **characterized in that** the square of the height (H) of the boiling chamber (50) is less than 3/10^{ths} of base area (SB) of the boiling chamber (50).

3. A steam generator base for a steam cooker according to claim 1 or claim 2, **characterized in that** the cross-sectional area (S) of the bottom passage (51) is less than 1/20^{th} of the side area (SL) of the boiling chamber (50) defined by the separator member (40).

4. A steam generator base for a steam cooker according to any one of claims 1 to 3, **characterized in that** it is made up of a lower element (2) forming the receptacle (10) and of an upper element (3) disposed on the lower element (2), the upper element (3) having the separator element (40) extending in the receptacle (10).

5. A steam generator base for a steam cooker according to claim 4, **characterized in that** the upper element (3) forms a juice collector tray (61).

6. A steam generator base for a steam cooker according to any one of claims 1 to 5, **characterized in that** the receptacle (10) presents a width, of which more than 80% is occupied by the heater device (30).

7. A steam generator base for a steam cooker according to any one of claims 1 to 6, **characterized in that** the receptacle (10) has a side wall (12) provided with an internal side projection (14).

8. A steam generator base for a steam cooker according to claim 7, **characterized in that** control means (4) are arranged outside the internal side projection (14).

9. A steam generator base for a steam cooker according to any one of claims 1 to 8, **characterized in that** the separator element (40) co-operates with the receptacle (10) to define two water reservoirs (52, 53) that communicate with each other.

10. A steam generator base for a steam cooker according to claim 7 or claim 8, **characterized in that** the separator element (40) co-operates with the receptacle (10) to define two water reservoirs (52, 53) that communicate with each other, and **in that** the two water reservoirs (52, 53) are disposed on either side of the internal side projection (14).

11. A steam generator base for a steam cooker according to any one of claims 1 to 10, **characterized in that** the separator member (40) forms a ring.

12. A steam generator base for a steam cooker according to any one of claims 1 to 11, **characterized in that** the heater device (30) is disposed entirely under the bottom (11) of the receptacle (10).

13. A steam generator base for a steam cooker according to any one of claims 1 to 12, **characterized in that** the heater device (30) is mounted in an opening (15) provided in the bottom (11) of the receptacle (10).

14. A steam generator base for a steam cooker according to any one of claims 1 to 13, **characterized in that** the receptacle (10) is made of a plastics material.

15. A steam generator base for a steam cooker according to any one of claims 1 to 14, **characterized in that** the hotplate (31) has a peripheral edge (33) inserted into an annular gasket (16) mounted in the opening (15).

16. A steam generator base for a steam cooker according to claim 15, **characterized in that** the annular gasket (16) is mounted in the opening (15) below the bottom (11) of the receptacle (10).

17. A steam generator base for a steam cooker according to claim 15 or claim 16, **characterized in that** the peripheral edge (33) is turned downwards.

18. A steam generator base for a steam cooker according to any one of claims 15 to 17, **characterized in that** the annular gasket (16) is mounted in a peripheral groove (17) provided below the opening (15).

## Patentansprüche

1. Dampferzeugungssockel für einen Dampfkocher, der einen Auffang (10) mit einem Boden (11) aufweist, eine Heizvorrichtung (30), die im Boden (11) des Auffangs (10) angebracht ist, und ein Trennorgan (40), das sich im Auffang (10) erstreckt, wobei das Trennorgan (40) seitlich zumindest teilweise eine über der Heizvorrichtung (30) angeordnete Siedekammer (50) begrenzt, das Trennorgan (40) mit dem Auffang (10) einen unteren Durchgang (51) ausbildet und die Siedekammer (50) mindestens eine Dampfaustrittsöffnung (62) aufweist, **dadurch gekennzeichnet, dass** die Heizvorrichtung (30) eine Heizplatte (31) aufweist, das Quadrat der Höhe (HS) des Trennorgans (40) weniger als 3/10 der Grundfläche (SB) der Siedekammer (50) beträgt und der Querschnitt (S) des unteren Durchgangs (51) weniger als 1/10 der Seitenfläche (SL) der Siedekammer (50) beträgt, die durch das Trennorgan (40) begrenzt ist.

2. Dampferzeugungssockel für einen Dampfkocher nach Anspruch 1, **dadurch gekennzeichnet, dass** das Quadrat der Höhe (H) der Siedekammer (50) weniger als 3/10 der Grundfläche (SB) der Siedekammer (50) beträgt.

3. Dampferzeugungssockel für einen Dampfkocher nach Anspruch 1 oder 2, **dadurch gekennzeichnet, dass** der Querschnitt (S) des unteren Durchgangs (51) weniger als 1/20 der Seitenfläche (SL) der Siedekammer (50) beträgt, die durch das Trennorgan (40) begrenzt ist.

4. Dampferzeugungssockel für einen Dampfkocher nach einem der Ansprüche 1 bis 3, **dadurch gekennzeichnet, dass** er ein unteres Element (2), das den Auffang (10) bildet, und ein oberes Element (3) aufweist, das auf dem unteren Element (2) angeordnet ist, wobei das obere Element (3) das Trennorgan (40) aufweist, das sich im Auffang (10) erstreckt.

5. Dampferzeugungssockel für einen Dampfkocher nach Anspruch 4, **dadurch gekennzeichnet, dass** das obere Element (3) ein Saftauffangbecken (61) bildet.

6. Dampferzeugungssockel für einen Dampfkocher nach einem der Ansprüche 1 bis 5, **dadurch gekennzeichnet, dass** die Heizvorrichtung (30) mehr als 80% einer Breite des Auffangs (10) einnimmt.

7. Dampferzeugungssockel für einen Dampfkocher nach einem der Ansprüche 1 bis 6, **dadurch gekennzeichnet, dass** der Auffang (10) eine Seitenwand (12) mit einer inneren, seitlichen Erhebung (14) aufweist.

8. Dampferzeugungssockel für einen Dampfkocher nach Anspruch 7, **dadurch gekennzeichnet, dass** Steuermittel (4) außerhalb der inneren, seitlichen Erhebung (14) angeordnet sind.

9. Dampferzeugungssockel für einen Dampfkocher nach einem der Ansprüche 1 bis 8, **dadurch gekennzeichnet, dass** das Trennorgan (40) mit dem Auffang (10) zwei miteinander verbundene Wasserbehälter (52, 53) begrenzt.

10. Dampferzeugungssockel für einen Dampfkocher nach Anspruch 7 oder 8, **dadurch gekennzeichnet, dass** das Trennorgan (40) mit dem Auffang (10) zwei miteinander verbundene Wasserbehälter (52, 53) begrenzt und die beiden Wasserbehälter (52, 53) auf der einen und auf der anderen Seite der inneren, seitlichen Erhebung (14) angeordnet sind.

11. Dampferzeugungssockel für einen Dampfkocher nach einem der Ansprüche 1 bis 10, **dadurch gekennzeichnet, dass** das Trennorgan (40) einen Kranz bildet.

12. Dampferzeugungssockel für einen Dampfkocher nach einem der Ansprüche 1 bis 11, **dadurch gekennzeichnet, dass** die Heizvorrichtung (30) vollständig unter dem Boden (11) des Auffangs (10) angeordnet ist.

13. Dampferzeugungssockel für einen Dampfkocher nach einem der Ansprüche 1 bis 12, **dadurch gekennzeichnet, dass** die Heizvorrichtung (30) in einer Öffnung (15) angebracht ist, die am Boden (11) des Auffangs (10) ausgebildet ist.

14. Dampferzeugungssockel für einen Dampfkocher nach einem der Ansprüche 1 bis 13, **dadurch gekennzeichnet, dass** der Auffang (10) aus Kunststoff hergestellt ist.

15. Dampferzeugungssockel für einen Dampfkocher nach einem der Ansprüche 1 bis 14, **dadurch gekennzeichnet, dass** die Heizplatte (31) einen Umfangsrand (33) aufweist, der in eine in der Öffnung (15) angebrachte ringförmige Dichtung (16) eingesetzt ist.

16. Dampferzeugungssockel für einen Dampfkocher nach Anspruch 15, **dadurch gekennzeichnet, dass** die ringförmige Dichtung (16) unter dem Boden (11) des Auffangs (10) in der Öffnung (15) angebracht ist.

17. Dampferzeugungssockel für einen Dampfkocher nach Anspruch 15 oder 16, **dadurch gekennzeichnet, dass** der Umfangsrand (33) nach unten umgebogen ist.

18. Dampferzeugungssockel für einen Dampfkocher nach einem der Ansprüche 15 bis 17, **dadurch gekennzeichnet, dass** die ringförmige Dichtung (16) in einer Umfangsnut (17) angebracht ist, die unter der Öffnung (15) ausgebildet ist.
